# DEMANDE DE BREVET EUROPEEN

(11) **EP 1 985 773 A1**
(43) Date de publication de la demande: **29.10.2008**
(21) Numéro de dépôt: 08290370.9
(22) Date de dépôt: 15.04.2008
(51) Int. Cl.: E04B 9/20, B25B 5/10

(54) **Elément de suspente pour système de suspension réglable**

(30) Priorité: 23.04.2007 FR 0702916
(71) Demandeur: KP1, 84000 Avignon (FR)
(72) Inventeur: Goumarre, Florent, 30200 Orsan (FR)
(74) Mandataire: Robert, Jean-Pierre

(57) **Abrégé**

L'invention concerne un entrevous formé d'une paroi mince en matériau thermoplastique injectable, comportant entre deux bords latéraux (2,3) une série de compartiments (5) transversaux séparés les uns des autres par des dépressions transversales (4) qui définissent les parois latérales (5b)des compartiments, chacun d'eux possédant deux parois terminales (8) dont la base est une partie du bord latéral (2,3) correspondant de l'entrevous, dans lequel chaque paroi terminale (8) présente deux structures latérales (9,10), chacune en forme de pylône en caisson ouvert sur l'intérieur du compartiment (5) formant raidisseurs de cette paroi (8), inclinées (A) sur le plan contenant les deux bords latéraux (2,3) de l'entrevous et réunies par une cloison (11) formant le fond d'une dépression (12) séparant les deux pylônes (9,10).

## Description

La présente invention concerne un système de suspension sous le plancher d'un bâtiment pour par exemple installer une armature de faux plafond. Plus précisément elle concerne un élément de suspente pour ce type de système de suspension.

### ARRIERE PLAN DE L'INVENTION

Il existe de nombreux systèmes de suspente ajustable en longueur, utilisable notamment pour la suspension de rail profilés destinés à la pose de plaque sous une structure de support. C'est le cas notamment des faux plafonds ou des habillages acoustiques ou d'isolation phonique...

Le principe de ces systèmes consiste en deux pièces, l'une à fixer sur la structure et l'autre à fixer sur la première pièce de manière ajustable en position par l'une de ses extrémités, l'autre extrémité de cette seconde pièce étant conformée pour recevoir les rails de support des panneaux. Cette possibilité d'ajustement permet un alignement correct des rails ou des profilés formant les supports des panneaux par exemple de faux plafonds.

La plupart des systèmes que l'on trouve sur le marché sont des systèmes dédiés c'est-à-dire que les deux éléments qui constituent la suspente ne peuvent être mis en oeuvre que l'un avec l'autre.

La présente invention entend offrir un dispositif dans lequel la pièce à fixer sur la structure peut accueillir une seconde pièce de facture simplifiée au moins en ce qui concerne les moyens qui coopèrent pour le réglage et la fixation de cette seconde pièce sur la première.

### OBJET DE L'INVENTION

A cet effet l'invention a donc pour objet un élément de suspente pour système de suspension réglable comprenant un serre-joint avec une vis et un bâti en forme de cavalier qui porte une languette parallèle à l'axe de la vis dans lequel la languette possède sur sa face opposée à la vis des reliefs constituant des poinçonnements alignés d'amorçage pour vis auto-taraudeuse.

Pour l'opérateur sur chantier il est ainsi simple et sûr de pouvoir mettre en place de manière ajustée les deux éléments de la suspente.

Dans une première réalisation, les poinçonnements sont constitués par les intersections d'une rainure centrale parallèle à la vis et de stries transversales à la rainure centrale.

Dans une variante de réalisation, les poinçonnements sont formés par des avant-trous alignés au centre de la languette.

### BREVE DESCRIPTION DES DESSINS

D'autres caractéristiques et avantages de l'invention ressortiront de la description donnée ci-après de quelques exemples de réalisation.

Il sera fait référence aux dessins annexés parmi lesquels :
- la figure 1 est une vue extérieure d'une suspense conforme à l'invention ;
- la figure 2 représente un détail de la figure 1 ;
- la figure 3 représente une variante de la réalisation de la figure 2.

### DESCRIPTION DETAILLEE DE L'INVENTION

Aux figures, on a représenté l'élément de suspente selon l'invention se présentant sous la forme d'un serre-joint avec un bâti 1 en tôle pliée et nervurée. Ce bâti constitue un cavalier avec un dos 1a et deux ailes 1b et 1c. Une vis 2 traverse l'une de ces ailes 1b. Le serre-joint peut ainsi être fixé par exemple au talon d'une poutrelle à talon sous les entrevous d'un plancher.

Le dos 1a de ce serre-joint est prolongé vers le bas par une languette 3 qui constitue une patte de fixation pour un second élément de suspente 4 en forme de réglette pourvue d'orifices 5.

L'extrémité inférieure non représentée de cette réglette est équipée de tout moyen utile au maintien de rails ou profilés qui appartiennent à une structure constructive complémentaire, suspendue sous le plancher, par exemple un faux plafond, des panneaux d'isolation...

L'un des orifices 5 est placé au niveau de la languette 3 (en fonction de l'altitude désirée du faux plafond par exemple) et la réglette 4 est fixée au serre-joint par une vis 6 auto-taraudeuse qui passe dans l'orifice 5 et perce la languette 3. Cette opération est exécutée sur chantier par un opérateur placé dans des conditions inconfortables.

La pointe 6a de la vis 6 est présentée contre la languette 5 au niveau d'une rainure centrale 7 que comporte cette languette sur sa face opposée à celle tournée vers la vis 2. Plus précisément, la pointe de la vis 6 est accrochée par le débouché dans la rainure 7 d'une des stries transversales 8 que la languette présente également sur cette même face. Cette accroche constitue le point d'amorçage du perçage de la languette par la vis 6 lors de sa manoeuvre par l'opérateur.

Ces moyens de poinçonnements de la languette améliore sensiblement la pose de la suspente et son réglage en longueur, en diminuant les risques d'un mauvais engagement de la vis qui conduit à la nécessité d'un démontage total de la suspente et de son remplacement avec la consommation supplémentaire de temps correspondante.

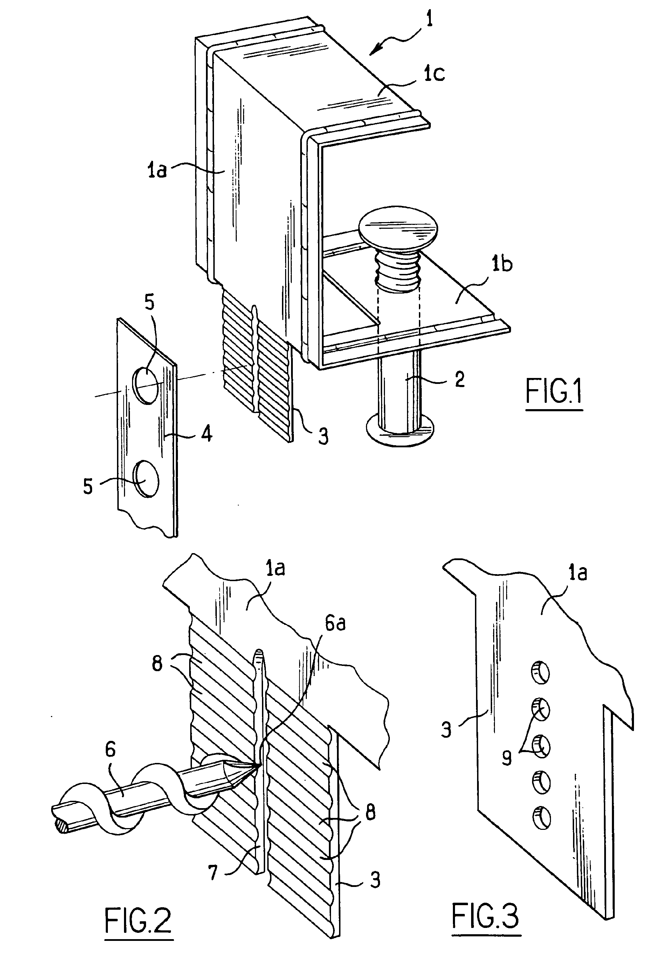

Les moyens de poinçonnements représentés à la figure 3 sont des avant-trous 9 qui jouent le même rôle d'accroche et d'amorçage de la vis 6 de fixation que la rainure 7 et les stries 8. On pourrait d'ailleurs imaginer limiter ces avant-trous à de simples marques coniques de poinçonnage.

Grâce aux moyens de l'invention, il est possible de conserver l'usage de vis bon marché et très couramment utilisées dans le domaine concerné par l'invention.

## Revendications

1. Elément de suspente pour système de suspension réglable comprenant un serre-joint avec une vis (2) et un bâti (1) en forme de cavalier qui porte une languette (3) parallèle à l'axe de la vis (2), **caractérisé en ce que** la languette (3) possède sur sa face opposée à la vis, des reliefs (7, 8, 9), constituant des poinçonnements alignés d'amorçage pour vis (6) auto-taraudeuse.

2. Elément de suspente selon la revendication 1, **caractérisé en ce que** ces poinçonnements sont constitués par l'intersection d'une rainure centrale (7) parallèle à la vis et de stries (8) transversales à la rainure centrale (7).

3. Elément de suspente selon la revendication 1, **caractérisée en ce que** les poinçonnements sont formés par des avant-trous (9) alignés au centre de la languette (3).
